# EUROPÄISCHE PATENTANMELDUNG

(11) **EP 1 855 018 A2**
(43) Veröffentlichungstag der Anmeldung: **14.11.2007**
(21) Anmeldenummer: 07107774.7
(22) Anmeldetag: 08.05.2007
(51) Int. Cl.: F16B 39/24

(54) **Schraubensicherung**

(30) Priorität: 11.05.2006 AT 8162006
(71) Anmelder: Bauer, Robert, 7501 Siget in der Wart 95 (AT)
(72) Erfinder: Bauer, Mag. Robert, 7501, Rotenturm/Pinka (AT); Wamser, Gernot, 2380, Perchtoldsdorf (AT); Wamser, Dieter, 1140, Wien (AT)
(74) Vertreter: Müllner, Martin

(57) **Zusammenfassung**

Eine Schraubensicherung (1) zur Sicherung von Schraubenelementen gegen ungewolltes Losdrehen, besteht aus einem in eine Mutter (2) eingelegten Paket (3) aus Keilscheiben (4, 5, 6) und einer Arretierschraube (7), die das Keilscheibenpaket (3) gegen das Schaftende des zu sichernden Gewindebolzens (17) drückt. Die Mutter (2) kann mit dem vorgegebenen Standarddrehmoment angezogen werden und erst danach erfolgt der formschlüssige Eingriff der Keilscheibe (4) ausschließlich in das Schaftende des Gewindebolzens (17), so dass keine Beschädigung des Werkstückes durch die Verzahnung eintritt. Aufgrund der Differenz zwischen dem Keilwinkel der Keilscheiben (4, 5, 6) und dem Steigungswinkel des Mutterngewindes entsteht eine Selbsthemmung, die das Losdrehen auch bei höchster dynamischer Belastung unterbindet. Die Sicherungswirkung der Schraubensicherung (1) betrifft sowohl die Schraube (16) als auch die Mutter (2), ohne dass der Schraubenkopf separat gesichert werden muss, und sie wirkt auch auf einer ungesicherten Unterlegscheibe. Die Schraubensicherung (1) hat dieselben radialen Außenmaße wie eine Standardmutter. Bei einer Umrüstung können bestehende (Rad-) Gewindebolzen beibehalten werden.

## Beschreibung

### Technisches Gebiet

Die Erfindung betrifft eine Schraubensicherung für eine Mutter, die auf einen Gewindebolzen aufschraubbar ist, mit aneinander liegenden Keilscheiben, deren gegenseitige Berührungsflächen eine Keilverzahnung mit einem Steigungswinkel größer als der Steigungswinkel des Gewindes des Gewindebolzens aufweisen, wobei die anderen Flächen der Keilscheiben Verzahnungen oder Rippen aufweisen.

### Stand der Technik

Derartige Scheiben sind als Keilscheiben in paarweiser Anordnung zum Beispiel aus der DE 684466 bekannt. Das Keilscheibenpaar wird auf dem Schraubenschaft unter dem Schraubenkopf und/oder Schraubenmutter aufgefädelt. Ein Keilscheibenpaar besteht aus zwei gleichen, gehärteten Scheiben, die auf den einander gegenüberliegenden Auflageflächen mit Keilflächen und auf der anderen Seite mit einer Verzahnung versehen sind. Die Scheiben werden gemeinsam montiert, wobei die Seiten mit den Keilflächen zueinander schauen und die Seiten mit der Verzahnung nach außen gewendet sind. Bei der Montage prägen sich die Zähne in die benachbarten Flächen z.B. eines Werkstückes und eines Schraubenkopfes oder einer Mutter ein und es entsteht quasi eine formschlüssige Verbindung zwischen jeweils einer Scheibe des Keilscheibenpaares und der benachbarten Fläche.

Die Keilflächen weisen einen Steigungswinkel auf, der größer ist als der Steigungswinkel des Gewindes der jeweiligen Schraubverbindung. Der Steigungssinn der Keilflächen ist dabei gleich dem Steigungssinn des Gewindes. Für den Fall, dass sich die Schraube bzw. Mutter losdrehen will, vollführen die zwei Keilscheiben eine gegenseitige Zwangsrotation, wobei sich die Keilscheiben gegeneinander verdrehen und entlang der Keilflächen verschieben.

Dadurch wird das Scheibenpaar dicker und die Vorspannkraft in der Schraube steigt, wodurch eine Selbsthemmung der Anordnung eintritt, die jede weitere Losdrehbewegung unterbindet.

Ein wesentliches Kriterium für die Funktionserfüllung von Scheiben mit Keileffekt ist neben der geometrischen Ausgestaltung der Keilflächen die Zwangsverdrehung zwischen den beiden Scheiben beim Losdrehen der Schraubverbindung. Diese Zwangsverdrehung wird dadurch erzielt, dass die Scheiben jeweils an der Außenseite verzahnt sind, diese Verzahnung sich in die Gegenauflage einprägt und so quasi eine Formschlussverbindung hergestellt wird.

Als Nachteil wird gesehen, dass die bei dieser Schraubensicherung auftretende Oberflächenbeschädigung durch Einkerbungen der Verzahnung in den meisten Fällen nicht erwünscht und in gewissen Anwendungsfällen eine Beschädigung der Oberflächenbeschichtung dezidiert auch nicht erlaubt ist.

Ein weiterer Nachteil ist die erhöhte Reibung auf der Verzahnung der Scheibenaußenseiten, die sich beim Anziehen in einem Verlust der erzielbaren Vorspannkraft bei gegebenem Anzugsdrehmoment im Vergleich zur Montage auf glatten Unterlegscheiben auswirkt. Damit ist die gewünschte Klemmkraft in der Schraubenverbindung nicht vorhanden bzw. ein erhöhtes Anzugsmoment erforderlich, um die gewünschte Klemmkraft zu erzielen.

Der US 5080545 ist eine Ausführung mit glatten Außenseiten der Keilscheiben entnehmbar, während die CH 129964 die Kombination einer Mutter mit einer Keilscheibe mit glatter Unterseite zeigt.

Nachteilig bei dieser Konstruktion ist, dass keinerlei Gewähr besteht, dass es beim Losdrehen zu einer Zwangsverdrehung zwischen den mit Keilflächen versehenen Elementen kommt. Eine relative Bewegung der gesamten Sicherungsanordnung zur benachbarten Auflagefläche wäre die Folge, wodurch jeglicher Sicherungseffekt verloren ginge.

Ein weiterer Nachteil der Sicherung von Schraubverbindungen mittels bisher bekannter Keilscheiben bzw. auch bei allen sonstigen Sicherungsscheiben beim Einsatz von Durchgangsschrauben beruht auf der Notwendigkeit, sowohl den Schraubenkopf als auch die Mutter zu sichern, da Losdreherscheinungen an beiden Enden der Schraube auftreten können. Das bewirkt, dass beide Seiten des Werkstückes, sowohl auf Schraubenkopf- als auch auf Mutternseite, durch die Verzahnung beschädigt werden. Außerdem ist es mitunter nicht möglich bzw. nicht erwünscht, unter dem Schraubenkopf Keilscheiben zu platzieren, und man hat deswegen keine Gewähr, dass die Schraubverbindung verlässlich gegen Losdrehen gesichert ist. Ein weiterer Nachteil der Sicherung von Schraubverbindungen mittels bisher bekannter Keilscheiben bzw. auch bei allen sonstigen Sicherungsscheiben ist die Notwendigkeit, die Einheit Schraube und Mutter um zusätzliche Teile zu erweitern. Die EP 1325238 Azeigt eine Ausführung, wobei eine Bundmutter unverlierbar mit Keilscheiben mittels eines Kunststoffringes verbunden ist. Damit wird zwar die Teilevielfalt auf der Mutternseite der Schraubverbindung wieder reduziert, allerdings ist der Außendurchmesser dieser Ausführung wesentlich größer als bei einer Standardsechskantmutter und reduziert damit die Einsatzmöglichkeiten. Ein weiterer Nachteil der Sicherung von Schraubverbindungen mittels bisher bekannter Keilscheiben bzw. auch bei allen sonstigen Sicherungsscheiben zeigt sich beim Einsatz bei Langlöchern, großen Bohrungen, weichem Auflagematerial und bei sonstigen Anwendungen, wo die Kontaktflächen zwischen der Sicherungsscheibe und dem Werkstück einer zu großen Flächenpressung ausgesetzt sind. Üblicherweise behebt man dieses Problem durch den Einsatz von großen Unterlegscheiben. Das Funktionsprinzip von den bisher bekannten Keilscheiben, das einen Formschluss zum Werkstück erfordert, verbietet jedoch den Einsatz einer gegen Verdrehen ungesicherten Unterlegscheibe.

### Darstellung der Erfindung

Technische Aufgabe

Es ist Aufgabe der vorliegenden Erfindung, diese Nachteile zu beseitigen und unter Beibehaltung der bewährten, vorteilhaften Sicherheitseigenschaften von Scheiben mit Keilflächen eine besonders kompakt handel- und anwendbare Schraubensicherung zur Verfügung zu stellen.

### Technische Lösung

Diese Aufgabe wird durch eine Schraubensicherung der eingangs genannten Art erfindungsgemäß dadurch gelöst, dass im Inneren der Mutter mindestens eine axiale, das Innengewinde durchsetzende Nut vorgesehen ist, in die ein radialer Lappen einer mit beiderseitiger Keilverzahnung ausgebildeten Keilscheibe zur Drehsicherung eingreift, wobei beiderseits dieser drehgesicherten Keilscheibe jeweils eine Keilscheibe mit korrespondierender Keilverzahnung anliegt, sodass sich ein Paket von drei Keilscheiben ergibt, und dass in die Mutter von der dem Gewindebolzen abgewendeten Seite eine Arretierschraube einschraubbar ist, deren Stirnfläche gegen die Außenfläche der einen Keilscheibe schraubbar ist, sodass das Paket der Keilscheiben gegen die Stirnfläche des Gewindebolzens andrückbar ist.

Da sich die äußere Verzahnung der Keilscheiben nur auf der Stirnseite des Gewindebolzens formschlüssig abstützt, wird mit Sicherheit verhindert, dass die Werkstückoberfläche beschädigt wird, sodass sich die Schraubensicherung beispielsweise im Flugzeugbau oder als Radmutter beim LKW und bei Bussen eignet.

Weiters ermöglicht der Einsatz der erfindungsgemäßen Schraubensicherung den Verzicht auf die separate Sicherung des Schraubenkopfes gegen Losdrehen sowie die beliebige Verwendung von frei rotierbaren Unterlegscheiben unter Schraubenkopf und Mutter, da die Sicherungswirkung alleine durch die Wirkung der Keilscheiben auf den Schraubenschaft entsteht. Die Schraubensicherung ist mit derselben Schlüsselweite herstellbar wie die entsprechende Standardmutter gemäß Norm und kann auf einen Bund oder andere Verbreiterungen verzichten, wodurch ein Einsatz in üblichen Senklöchern ermöglicht wird. Da die Herstellung der formschlüssigen Verbindungen zwischen den verzahnten Außenseiten der Keilscheiben und den Schraubenschaftenden erst nach dem Anziehen der Schraubensicherung mit dem vorgegebenen Anzugsmoment stattfindet, gibt es keine Reibungsverluste während des Festdrehens, die zu einem Verlust an Vorspannkraft in der Schraube bzw. an Klemmkraft in der Verbindung selbst führen.

Um einem fehlerhaften Einbau vorzubeugen, ist es vorgesehen, dass die das Paket bildenden Keilscheiben miteinander frei drehbar verbunden sind.

Dies kann nach einem weiteren Merkmal der Erfindung erreicht werden, wenn die Keilscheiben jeweils über eine zentrale Bohrung verfügen, wobei die äußeren beiden Keilscheiben in ihren dem Paket abgewandten Auflageflächen jeweils eine konzentrische Fase oder Freistellung zur zentralen Bohrung zur Aufnahme einer Hülse aufweisen.

Damit die Schraubensicherung nicht erst vor Ort durch den Anwender zusammengebaut werden muss, ist es zweckmäßig, wenn die axiale Nut in der Mutter an der Einschraubseite der Mutter für die Arretierschraube beginnt und eine Länge aufweist, die geringer als die Länge der Bohrung der Mutter ist. Dieses Merkmal ermöglicht, dass das Keilscheiben-Paket werkseitig in die Mutter eingelegt und durch Eindrehen der Arretierschraube ein Zerfallen der aus mehreren Teilen bestehenden Einheit erfolgreich verhindert wird.

Um die Mutternhöhe der Schraubensicherung möglichst gering zu halten, ist es günstig, wenn die Arretierschraube als Gewindestift ausgebildet ist und in der der Mutter abgewandten Stirnseite über eine Formschlussaufnahme für ein Werkzeug, z.B. Innensechskant oder Schlitzaufnahme, verfügt.

Eine besondere Ausführungsform sieht vor, dass die Arretierschraube als Kopfschraube ausgebildet ist und dass die Kontur des Kopfes der Kopfschraube mit der Kontur der Mutter übereinstimmt. Diese Ausführungsvariante hat den Vorteil, dass die gesamte Montage der Schraubensicherung mit nur einem einzigen Werkzeug, wie z.B. einem Steckschlüssel, durchgeführt werden kann. Dazu wird die gesamte Schraubensicherung in das Werkzeug eingeschoben und an dem Gewindebolzen soweit angezogen, bis die Mutter das Werkstück mit der gewünschten Kraft fixiert. Zum Festziehen der Arretierschraube wird das Werkzeug soweit von der Schraubensicherung abgezogen, bis sich nur mehr der Kopf der Arretierschraube im Werkzeug befindet.

Um die Schraubensicherung vor Witterungseinflüssen zu schützen, ist es zweckmäßig, wenn auf die Schraubensicherung eine Schutzkappe aufschiebbar ist, welche dichtend an der Stirnseite bzw. an der äußeren Kontur des Umfangs der Mutter und gegebenenfalls der Kopfschraube anliegt.

Alternativ dazu ist es zweckmäßig, wenn auf die Schraubensicherung eine Schutzkappe aufschiebbar ist, welche an der Stirnfläche der Mutter anliegt und kleiner bzw. gleich groß ist wie der Inkreis der von der Stirnseite sichtbaren Sechseckkontur der Mutter und über einen in das Innere der Mutter ragenden Fortsatz verfügt, um mit der Schraubensicherung, insbesondere mit der Werkzeugaufnahme der Arretierschraube bzw. mit den Nuten der Mutter eine Kraftschlussverbindung eingehen zu können.

Besondere Ausbildungen sehen vor, dass der Bereich des Gewindes der Mutter für den Gewindebolzen und der Bereich des Gewindes für die Arretierschraube gegensinnig, mit unterschiedlichen Durchmessern und/oder mit unterschiedlichen Gewindesteigungen ausgeführt sind.

### Kurze Beschreibung der Abbildungen der Zeichnungen

Ein Ausführungsbeispiel des Erfindungsgegenstandes ist in den beiliegenden Zeichnungen dargestellt.

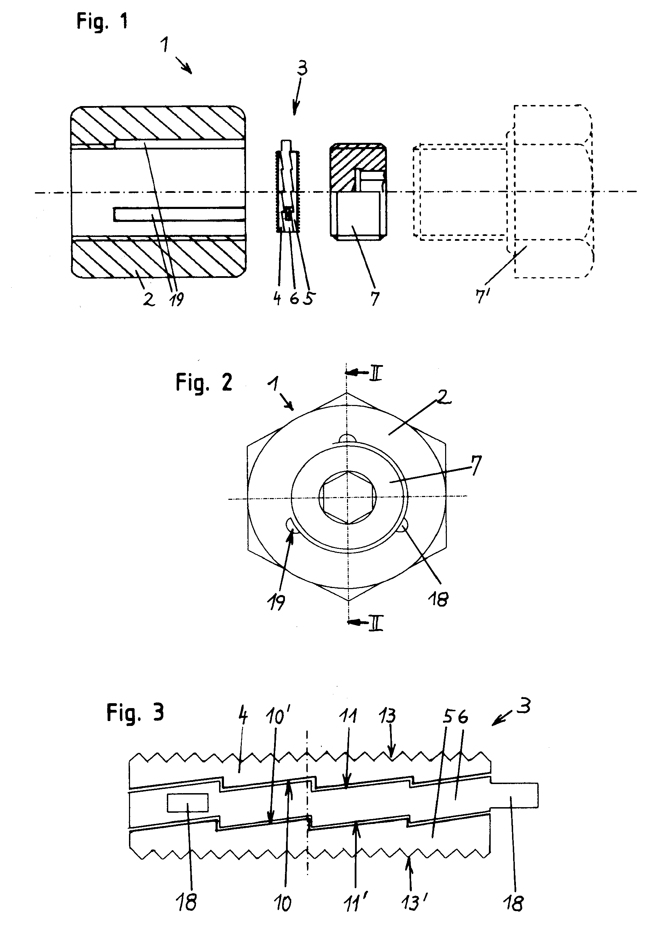

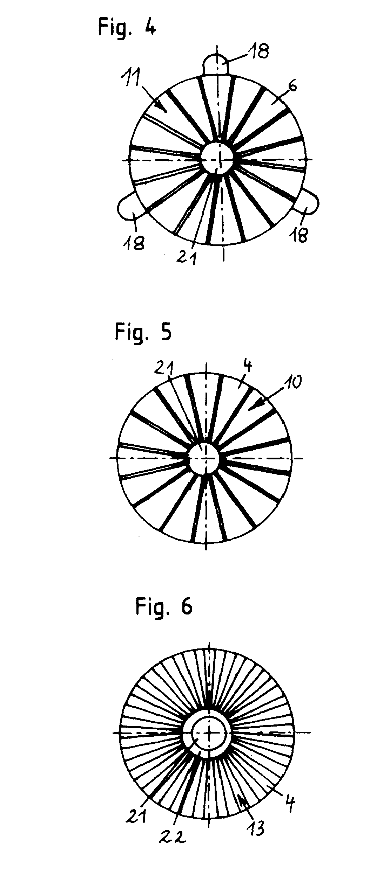

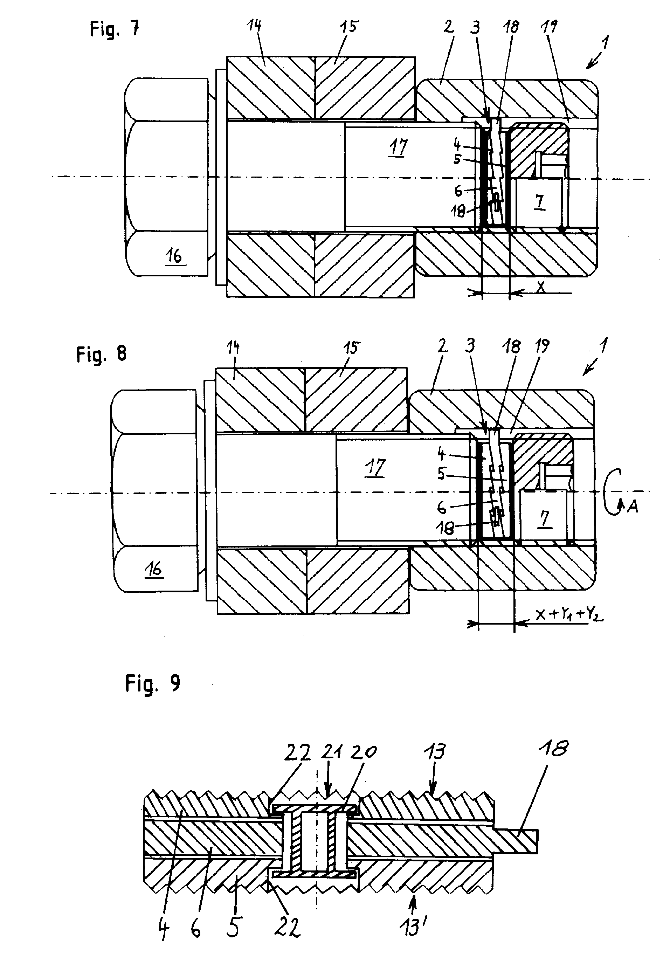

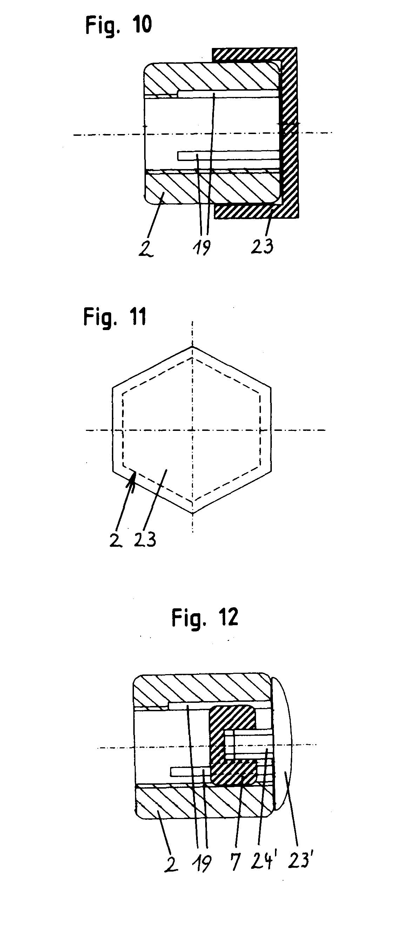

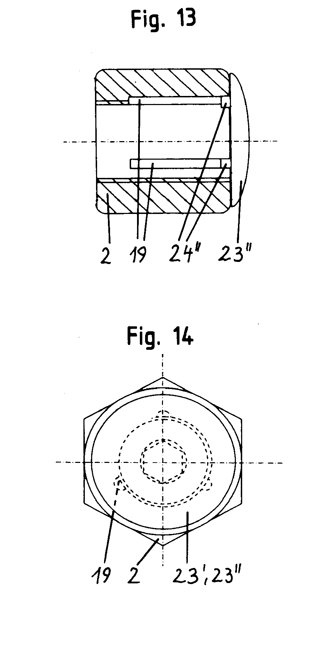

Fig. 1 zeigt eine teilweise geschnittene Ansicht der Bestandteile einer erfindungsgemäßen Schraubensicherung entlang der Linie II-II in Fig. 2, Fig. 2 eine Draufsicht in axialer Richtung gemäß Fig. 1, Fig. 3 eine Seitenansicht auf ein Paket von zwei Keilscheiben und einer dazwischen angeordneten drehgesicherten Keilscheibe, Fig. 4 eine Auf- und/oder Untersicht einer drehgesicherten Keilscheibe, Fig. 5 eine der drehgesicherten Keilscheibe gegenüberliegende Auflagefläche einer Keilscheibe, Fig. 6 eine äußere Auflagefläche einer Keilscheibe mit Verzahnungen, Fig. 7 eine beispielhafte Einbausituation der erfindungsgemäßen Schraubensicherung im Längsschnitt, wobei die Schraubverbindung keiner dynamischen Belastung ausgesetzt ist, Fig. 8 eine Ansicht gemäß Fig. 7, jedoch in dynamisch belastetem Zustand mit Losdreherscheinungen, Fig. 9 einen Längsschnitt eines Paketes gemäß Fig. 3, Fig. 10 einen Längsschnitt einer erfindungsgemäßen Mutter mit Schutzkappe, Fig. 11 eine axiale Draufsicht zu Fig. 10, Fig. 12 und Fig. 13 Ausführungsvarianten der Schutzkappe in geschnittener Darstellung und Fig. 14 eine axiale Draufsicht gemäß den Fig. 12 und Fig. 13.

### Bester Weg zur Ausführung der Erfindung

Gemäß den Fig. 1 und 2 umfasst eine Schraubensicherung 1 eine Mutter 2, ein Paket 3 aus zwei Keilscheiben 4, 5 und einer drehgesicherten Keilscheibe 6 sowie eine Arretierschraube 7. Alternativ zur Arretierschraube 7 ist eine Ausführung als Kopfschraube 7' strichliert dargestellt. Das Paket 3 und seine Bestandteile sind in den Fig. 3 bis 6 detailliert dargestellt.

Die einander gegenüberliegenden Auflageflächen 10, 11 der Keilscheibe 4 und der drehgesicherten Keilscheibe 6 sind in stufige Keilflächen unterteilt.

Gleiches gilt für die einander gegenüberliegenden Auflageflächen 10', 11' der Keilscheibe 5 und der drehgesicherten Keilscheibe 6.

Der Steigungswinkel der Keilflächen zu einer Normalebene auf die Schraubenachse ist dabei größer als der Steigungswinkel des Gewindes der zugehörigen Mutter 2.

Fig. 4 zeigt eine der identisch aussehenden Auflageflächen 11, 11' der drehgesicherten Keilscheibe 6. Die korrespondierenden, identischen Auflageflächen 10, 10' der Keilscheibe 4, 5 sind der Fig. 5 zu entnehmen.

Die gehärteten äußeren Auflageflächen 13, 13' der Keilscheiben 4, 5 sind mit Verzahnungen oder Rippen versehen, die sich beim Einbau des Paketes 3 in die jeweilige benachbarte Auflagefläche eindrücken und quasi eine Formschlussverbindung herstellen. Fig. 6 zeigt eine entsprechende Draufsicht auf die verzahnte Auflagefläche 13 der Keilscheibe 4 bzw. auf die Auflagefläche 13' der Keilscheibe 5.

Damit bei der Verarbeitung Anwendungsfehlern vorgebeugt wird, werden Schraubensicherungen zusammengesetzt gehandelt, um auch den Einbau so schnell wie möglich durchführen zu können. Dabei wird das Paket 3 in die Mutter 2 eingelegt und die Arretierschraube 7 einige Gewindegänge eingedreht.

Die Keilscheibe 6 verfügt gemäß den Fig. 4 und 3 an ihrem äußeren Umfang zur Verdrehsicherung über radiale Lappen 18, welche in korrespondierende, das Gewinde der Mutter 2 durchsetzende axiale Nuten 19 eingreifen.

Anhand der Fig. 7 und Fig. 8 wird die Wirkungsweise einer eingebauten, erfindungsgemäßen Schraubensicherung auf die Verbindung zweier Werkstücke 14, 15 mit einer Kopfschraube 16 beschrieben.

Die Mutter 2 wird wie eine Standardmutter mit dem erforderlichen Drehmoment auf den Gewindebolzen 17 der Kopfschraube 16 gedreht, wodurch die beiden Werkstücke 14, 15 fixiert werden.

Anschließend wird die Arretierschraube 7 angezogen. Dabei rutschen die mit ihren Auflageflächen 10, 11, 10', 11' aneinander grenzenden Keilscheiben 4, 5 und die drehgesicherte Keilscheibe 6 in eine Lage, die durch die annähernd senkrechten, axialen Begrenzungsflächen der Keilflächen bestimmt wird und erzielen dabei die in axialer Richtung geringstmögliche Dicke.

Die verzahnte Auflagefläche 13 der an der Stirnfläche des Gewindebolzens 17 aufliegenden Keilscheibe 4 prägt sich dabei in die Stirnseite des Gewindebolzens 17 ein und stellt mit der Stirnfläche eine Formschlussverbindung her.

Die mittlere drehgesicherte Keilscheibe 6 ist durch radiale Lappen 18 in den Nuten 19 der Mutter 2 verdrehgesichert. Die stumpfe Stirnseite der Arretierschraube 7 gleitet über die verzahnte Auflagefläche 13 der anliegenden Keilscheibe 5, bis sich die verzahnte Auflagefläche 13 in die Stirnfläche der Arretierschraube 7 eingeprägt hat und die Arretierschraube 7 schließlich fest sitzt.

Jeder durch Erschütterungen, Stöße oder Vibrationen verursachte Losdrehversuch führt durch die keilförmigen Auflageflächen 10, 11, 10', 11' zur gewünschten Selbsthemmung.

Die Reibung zwischen der Stirnfläche des Gewindebolzens 17 und der Keilscheibe 4 ist wegen des quasi Formschlusses größer als zwischen den beiden Auflageflächen 10, 11 mit den Keilflächen. Die Reibung zwischen der Stirnfläche der Arretierschraube 7 und der Keilscheibe 6 entspricht etwa der Reibung zwischen der Stirnfläche des Gewindebolzens 17 und der Keilscheibe 4.

Will sich die Mutter 2 gemäß Fig. 8, in Richtung des Pfeils A in der Aufdrehrichtung losdrehen, entsteht ein Aufgleiten zwischen der drehgesicherten Keilscheibe 6 und der dem Gewindebolzen 17 benachbarten Keilscheibe 4.

Durch das Aufgleiten steigt die axiale Ausdehnung Y₁ der Keilscheibe 4 und der drehgesicherten Keilscheibe 6 stärker als die mögliche Längsverschiebung der Mutter 2 entlang des Gewindebolzens 17, und Selbsthemmung tritt auf.

Will sich andererseits die Arretierschraube 7 losdrehen, dann entsteht ein Aufgleiten zwischen der drehgesicherten Keilscheibe 6 und der in die Stirnfläche der Arretierschraube 7 eingeprägten verzahnten Auflagefläche 13' der Keilscheibe 5. Dadurch steigt die axiale Ausdehnung Y₂ der Keilscheibe 5 und der drehgesicherten Keilscheibe 6 stärker als die mögliche Längsverschiebung der Arretierschraube 7 innerhalb der Mutter 2, und Selbsthemmung tritt auf.

In den Fig. 7 und 8 ist die besagte Längenzunahme des Paketes 3 von X auf X + Y₁ + Y₂ unter der Annahme dargestellt, dass sich sowohl die Mutter 2 als auch die Arretierschraube 7 losdrehen wollen. Die unterschiedlich langen Verschiebungswege resultieren aus den unterschiedlichen Winkeln der Keilflächen der Keilscheiben 4, 5, 6 einerseits und andererseits der Gewindesteigungen von der Mutter 2, dem Gewindebolzen 17 sowie der Arretierschraube 7, wobei der Steigungswinkel der Gewinde der kleinere ist.

Ein Lösen der Schraubensicherung 1 erfolgt mit üblichem Werkzeug durch stetige Krafterhöhung an der Arretierschraube 7 oder an der Mutter 2 in der Löserichtung, bis sich zwei Keilscheiben 4, 5, 6 soweit gegeneinander verdreht haben, dass die einander gegenüberliegenden keilförmigen Auflageflächen 10, 11, 10', 11' über die sperrende Keilflächenstufe gleiten und ein einfaches Weiterdrehen in Löserichtung ohne weitere Spannungserhöhung möglich ist.

Nuten 19, die sich nicht über die gesamte Höhe der Mutter 2 erstrecken, haben den Vorteil, dass Pakete 3 aus Keilscheiben 4, 5, 6 in die Mutter 2 eingelegt werden können und ein Durchfallen des Paketes 3 verhindert wird. Damit sich die radialen Lappen 18 nicht in den Innengewindegängen der Mutter 2 verfangen, hat es sich als günstig erwiesen, dass die Höhe der Nuten 19 etwa mit der eineinhalb- bis dreifachen Gewindeganghöhe ausgeführt wird.

Fig. 9 zeigt schließlich eine geschnittene Darstellung des Pakets 3, wobei die Keilscheiben 4, 5 und die drehgesicherte Keilscheibe 6 mit einer Hülse 20 zusammengehalten werden. Dazu verfügen die Keilscheiben 4, 5 und 6 über eine zentrale Bohrung 21. Die beiden Keilscheiben 4, 5 verfügen in ihren verzahnten Auflageflächen 13, 13' zusätzlich über Fasen oder Freistellungen 22, damit die eingesetzte Hülse 20 nicht in den Zahnungsbereich hineinragt. Um große Kontaktflächen zu erhalten, ist die Bohrung 21 mit möglichst kleinem Durchmesser ausgeführt. Mit Hülsen 20 aus Kunststoff können besonders leicht Pakete 3 gebildet werden.

Die axiale Länge der Mutter 2 setzt sich aus der erforderlichen Einschraubtiefe, also einer Mutternhöhe nach Norm, der Dicke des Paketes 3, einem ersten Toleranzabschnitt, welcher unterschiedliche Schraubenschaftüberstände ausgleicht und der Einschraubtiefe der Arretierschraube 7 zusammen. Beim Einsatz einer Kopfschraube 7' als Arretierschraube 7 ist die Mutternlänge um einen weiteren Toleranzabschnitt zu erhöhen. Unter einem ersten Toleranzabschnitt wird die Differenz der Normlängen von Schrauben verstanden. Bei einer M6 Gewindeschraube sind z.B. aufeinander folgende Längen 50 mm und 55 mm. Daraus ergibt sich ein Toleranzabschnitt von ca. 5 mm. Der weitere Toleranzabschnitt stellt sicher, dass die Kopfschraube 7' auch bei kürzestem Bolzenüberstand Kontakt zum Scheibenpaket erhält.

Fig. 10 zeigt eine Mutter 2 mit einer aufgeschobenen Schutzkappe 23.

Fig. 12 zeigt eine Mutter 2 mit einer aufgedrückten Schutzkappe 23', die in die Werkzeugaufnahme der Arretierschraube 7 mit einem korrespondierendem Fortsatz 24' eingequetscht ist. In dieser Ausführungsvariante erfährt das Außenmaß der Schraubensicherung 1 keine seitliche Vergrößerung.

Fig. 13 zeigt eine Mutter 2 mit einer aufgedrückten Schutzkappe 23", die mit korrespondierenden Fortsätzen 24" in die Nuten 19 der Mutter 2 eingequetscht ist.

In dieser Ausführungsvariante erfährt das Außenmaß der Schraubensicherung 1 ebenfalls keine seitliche Vergrößerung.

Die Schutzkappe 23, 23', 23" dient dazu, die Schraubensicherung 1 vor Verschmutzung zu schützen.

Es besteht die Möglichkeit, den Bereich des Gewindes der Mutter 2 für den Gewindebolzen 17 und den Bereich des Gewindes für die Arretierschraube 7 gegensinnig, mit unterschiedlichen Durchmessern und/oder mit unterschiedlichen Gewindesteigungen auszuführen.

Geeignete Einsatzgebiete der vorliegenden Schraubensicherung sind alle Anwendungen, wo es auf die Unversehrtheit der Werkstückoberfläche ankommt, wie beispielsweise im Flugzeugbau oder - gegebenenfalls in geeigneter Kombination mit einer Scheibe - bei der Radbefestigung an LKW und Bussen. Weitere Einsatzgebiete sind alle Anwendungen, wo der Einsatz von Bundmuttern vermieden werden soll, weiters überall dort, wo Unterlegscheiben verwendet werden, um die Flächenpressung zu verringern, wie bei Langlöchern und großen Bohrungen, aber auch auf sehr weichem Auflagematerial und weiters bei allen Anwendungen, wo der Schraubenkopf nicht gesichert werden kann oder soll und daher die Sicherung der Schraubverbindung ausschließlich über die Mutter erfolgen soll. Bei einer Umrüstung können bestehende (Rad-) Gewindebolzen 17 beibehalten werden. Es muss lediglich die bestehende Mutter durch eine erfindungsgemäße Schraubensicherung 1 ersetzt werden.

## Patentansprüche

1. Schraubensicherung (1) für eine Mutter (2), die auf einen Gewindebolzen (17) aufschraubbar ist, mit aneinander liegenden Keilscheiben (4, 5), deren gegenseitige Berührungsflächen eine Keilverzahnung mit einem Steigungswinkel größer als der Steigungswinkel des Gewindes des Gewindebolzens (17) aufweisen, wobei die anderen Flächen der Keilscheiben (4, 5) Verzahnungen oder Rippen aufweisen, **dadurch gekennzeichnet, dass** im Inneren der Mutter (2) mindestens eine axiale, das Innengewinde durchsetzende Nut (19) vorgesehen ist, in die ein radialer Lappen (18) einer mit beiderseitiger Keilverzahnung ausgebildeten Keilscheibe (6) zur Drehsicherung eingreift, wobei beiderseits dieser drehgesicherten Keilscheibe (6) jeweils eine Keilscheibe (4, 5) mit korrespondierender Keilverzahnung anliegt, sodass sich ein Paket (3) von drei Keilscheiben ergibt, und dass in die Mutter (2) von der dem Gewindebolzen (17) abgewendeten Seite eine Arretierschraube (7, 7') einschraubbar ist, deren Stirnfläche gegen die Außenfläche der einen Keilscheibe (5) schraubbar ist, sodass das Paket (3) der Keilscheiben (4, 5, 6) gegen die Stirnfläche des Gewindebolzens (17) andrückbar ist.

2. Schraubensicherung nach Anspruch 1, **dadurch gekennzeichnet, dass** die das Paket (3) bildenden Keilscheiben (4, 5, 6) miteinander frei drehbar verbunden sind.

3. Schraubensicherung nach Anspruch 2, **dadurch gekennzeichnet, dass** die Keilscheiben (4, 5, 6) jeweils über eine zentrale Bohrung (21) verfügen, wobei die äußeren beiden Keilscheiben (4, 5) in ihren dem Paket (3) abgewandten Auflageflächen (13, 13') jeweils eine konzentrische Fase oder Freistellung (22) zur zentralen Bohrung (21) zur Aufnahme einer Hülse (20) aufweisen.

4. Schraubensicherung nach einem der Ansprüche 1 bis 3, **dadurch gekennzeichnet, dass** die axiale Nut (19) in der Mutter (2) an der Einschraubseite der Mutter (2) für die Arretierschraube (7, 7') beginnt und eine Länge aufweist, die geringer als die Länge der Bohrung der Mutter (2) ist.

5. Schraubensicherung nach einem der Ansprüche 1 bis 4, **dadurch gekennzeichnet, dass** die Arretierschraube (7, 7') als Gewindestift ausgebildet ist und in der der Mutter (2) abgewandten Stirnseite über eine Formschlussaufnahme für ein Werkzeug, z.B. Innensechskant oder Schlitzaufnahme, verfügt.

6. Schraubensicherung nach einem der Ansprüche 1 bis 4, **dadurch gekennzeichnet, dass** die Arretierschraube (7) als Kopfschraube (7') ausgebildet ist.

7. Schraubensicherung nach Anspruch 6, **dadurch gekennzeichnet, dass** die Kontur des Kopfes der Kopfschraube (7') mit der Kontur der Mutter (2) übereinstimmt.

8. Schraubensicherung nach einem der Ansprüche 1 bis 7, **dadurch gekennzeichnet, dass** auf die Schraubensicherung (1) eine Schutzkappe (23) aufschiebbar ist, welche dichtend an der Stirnfläche bzw. an der äußeren Kontur des Umfangs der Mutter (2) und gegebenenfalls der Kopfschraube anliegt.

9. Schraubensicherung nach einem der Ansprüche 1 bis 7, **dadurch gekennzeichnet, dass** auf die Schraubensicherung (1) eine Schutzkappe (23', 23") aufschiebbar ist, welche an der Stirnfläche der Mutter (2) anliegt und kleiner bzw. gleich groß ist wie der Inkreis der von der Stirnseite sichtbaren Sechseckkontur der Mutter (2) und über einen in das Innere der Mutter (2) ragenden Fortsatz (24', 24") verfügt, um mit der Schraubensicherung (1), insbesondere mit der Werkzeugaufnahme der Arretierschraube (7) bzw. mit den Nuten (19) der Mutter (2) eine Kraftschlussverbindung eingehen zu können.

10. Schraubensicherung nach einem der Ansprüche 1 bis 9, **dadurch gekennzeichnet, dass** der Bereich des Gewindes der Mutter (2) für den Gewindebolzen (17) und der Bereich des Gewindes für die Arretierschraube (7) gegensinnig, mit unterschiedlichen Durchmessern und/oder mit unterschiedlichen Gewindesteigungen ausgeführt sind.
